# EUROPEAN PATENT APPLICATION

(11) **EP 2 860 997 A1**
(43) Date of publication of application: **15.04.2015**
(21) Application number: 13800938.6
(22) Date of filing: 06.06.2013
(51) Int. Cl.: H04W 8/00

(54) **COMMUNICATION CONTROL METHOD, USER TERMINAL, PROCESSOR AND RECORDING MEDIUM**

(30) Priority: 06.06.2012 US 201261656186 P
(71) Applicant: Kyocera Corporation, Kyoto-shi Kyoto 612-8501 (JP)
(72) Inventor: MORITA, Kugo, Kyoto-shi Kyoto 612-8501 (JP)
(74) Representative: Schwabe - Sandmair - Marx
(86) International application number: PCT/JP2013/065747
(87) International publication number: WO 2013/183729

(57) **Abstract**

A communication control method used in a cellular mobile communication system supporting inter-terminal communication that is direct radio communication capable of being performed between user terminals in a state in which a radio connection with a network is established, comprises a step of continuously transmitting, by the user terminal, a search signal for discovering a communication partner of the inter-terminal communication in a constant period when starting searching for the communication partner.

## Description

### [Technical Field]

The present invention relates to a communication control method, a user terminal, a processor, and a storage medium, which are used in a cellular mobile communication system supporting D2D communication.

### [Background Art]

In 3GPP (3rd Generation Partnership Project) which is a project aiming to standardize a cellular mobile communication system, the introduction of Device to Device (D2D) communication is discussed as a new function after release 12 (see Non Patent Literature 1).

In the D2D communication, a plurality of user terminals proximal to one another are able to perform direct communication with each other in the state in which a radio connection with a network is established (in the state in which synchronization is achieved).

In addition, the D2D communication is also called Proximity Service communication.

### [Citation List]

### [Non Patent Literature]

Non Patent Literature 1 3GPP technical report "TR 22.803 V0.3.0" May 2012

### [Summary of Invention]

However, the current 3GPP standards do not define specifications for appropriately controlling the D2D communication.

Therefore, an object of the present invention is to provide a communication control method, a user terminal, a processor, and a storage medium, with which it is possible to appropriately control D2D communication

A communication control method of the present invention is characterized in that the communication control method is a communication control method used in a cellular mobile communication system supporting inter-terminal communication that is direct radio communication capable of being performed between user terminals in a state in which a radio connection with a network is established, and the communication control method comprises a step of continuously transmitting, by the user terminal, a search signal for discovering a communication partner of the inter-terminal communication in a constant period when starting searching for the communication partner.

### [Brief Description of Drawings]

[Fig. 1] Fig. 1 is a configuration diagram of an LTE system.
[Fig. 2] Fig. 2 is a block diagram of UE.
[Fig. 3] Fig. 3 is a block diagram of eNB.
[Fig. 4] Fig. 4 is a protocol stack diagram of a radio interface in the LTE system.
[Fig. 5] Fig. 5 is a configuration diagram of a radio frame used in the LTE system.
[Fig. 6] Fig. 6 illustrates a data path in cellular communication.
[Fig. 7] Fig. 7 illustrates a data path in D2D communication.
[Fig. 8] Fig. 8 is a sequence diagram of a search operation pattern 1 according to an embodiment.
[Fig. 9] Fig. 9 is a sequence diagram of a search operation pattern 2 according to the embodiment.
[Fig. 10] Fig. 10 is a diagram for explaining a transmission cycle of a Discover signal (part 1).
[Fig. 11] Fig. 11 is a diagram for explaining a transmission cycle of the Discover signal (part 2).
[Fig. 12] Fig. 12 is a diagram for explaining a transmission cycle of the Discover signal (part 3).
[Fig. 13] Fig. 13 is a diagram for explaining a reception cycle of the Discover signal.
[Fig. 14] Fig. 14 is a diagram for explaining a method of determining whether UE is within a moving body (part 1).
[Fig. 15] Fig. 15 is a diagram for explaining a method of determining whether the UE is within the moving body (part 2).
[Fig. 16] Fig. 16 is a flow diagram illustrating a calculation operation of a movement speed.

### [Modes for carrying out the invention]

### [Summary of the embodiment]

A communication control method of the present invention is characterized in that the communication control method is a communication control method used in a cellular mobile communication system supporting inter-terminal communication that is direct radio communication capable of being performed between user terminals in a state in which a radio connection with a network is established, and the communication control method comprises a step of continuously transmitting, by the user terminal, a search signal for discovering a communication partner of the inter-terminal communication in a constant period when starting searching for the communication partner.

The communication control method may further comprise: a step of changing, by the user terminal, a transmission cycle of the search signal when a response signal for the search signal is not received in the constant period.

A user terminal of the present invention is characterized in that the user terminal is a user terminal supporting inter-terminal communication that is direct radio communication capable of being performed between user terminals in a state in which a radio connection with a network is established, and the user terminal comprises a processor that performs a process of continuously transmitting a search signal for discovering a communication partner of the inter-terminal communication in a constant period when starting searching for the communication partner.

A processor of the present invention is characterized in that the processor is a processor provided in a user terminal supporting inter-terminal communication that is direct radio communication capable of being performed between user terminals in a state in which a radio connection with a network is established, and the processor performs a process of continuously transmitting a search signal for discovering a communication partner of the inter-terminal communication in a constant period when starting searching for the communication partner.

A storage medium of the present invention is characterized in that the storage medium is a storage medium provided in a user terminal supporting inter-terminal communication that is direct radio communication capable of being performed between user terminals in a state in which a radio connection with a network is established, and the storage medium stores therein a program for causing the user terminal to perform a process of continuously transmitting a search signal for discovering a communication partner of the inter-terminal communication in a constant period when starting searching for the communication partner.

A communication control method of the present invention is characterized in that the communication control method is a communication control method used in a cellular mobile communication system supporting inter-terminal communication that is direct radio communication capable of being performed between user terminals in a state in which a radio connection with a network is established, and the communication control method comprises a step of controlling, by the user terminal, transmission of a search signal for discovering a communication partner of the inter-terminal communication in response to a movement state of the user terminal.

The movement state may include a movement speed, and the step of controlling may comprise a step of changing a transmission cycle of the search signal in response to the movement speed.

The step of controlling may comprise a step of stopping the transmission of the search signal when the movement speed has exceeded a threshold value.

The communication control method may further comprising: a step of calculating, by the user terminal, a movement speed of the user terminal in consideration of a movement speed of a moving body when the user terminal is within the moving body.

The movement state may include being moving and being stopping, and the step of controlling may comprise: a step of continuously transmitting the search signal in a constant period when the user terminal is transitioned from the being moving to the being stopping.

A user terminal of the present invention is characterized in that the user terminal is a user terminal supporting inter-terminal communication that is direct radio communication capable of being performed between user terminals in a state in which a radio connection with a network is established, and the user terminal comprises a processor that performs a process of controlling transmission of a search signal for discovering a communication partner of the inter-terminal communication in response to a movement state of the user terminal.

A processor of the present invention is characterized in that the processor is a processor provided in a user terminal supporting inter-terminal communication that is direct radio communication capable of being performed between user terminals in a state in which a radio connection with a network is established, and the processor performs a process of controlling transmission of a search signal for discovering a communication partner of the inter-terminal communication in response to a movement state of the user terminal.

A storage medium of the present invention is characterized in that the processor is a storage medium provided in a user terminal supporting inter-terminal communication that is direct radio communication capable of being performed between user terminals in a state in which a radio connection with a network is established, and the storage medium stores therein a program for causing the user terminal to perform a process of controlling transmission of a search signal for discovering a communication partner of the inter-terminal communication in response to a movement state of the user terminal.

A communication control method of the present invention is characterized in that the communication control method is a communication control method used in a cellular mobile communication system supporting inter-terminal communication that is direct radio communication capable of being performed between user terminals in a state in which a radio connection with a network is established, and the communication control method comprises a step of attempting to perform, by the user terminal, reception of a search signal from another user terminal at a constant cycle, wherein the constant cycle is determined in response to a period in which the other user terminal continuously transmits the search signal.

A user terminal of the present invention is characterized in that the user terminal is a user terminal supporting inter-terminal communication that is direct radio communication capable of being performed between user terminals in a state in which a radio connection with a network is established, and the user terminal comprises a processor that performs a process of attempting to perform reception of a search signal from another user terminal at a constant cycle determined in response to a period in which the other user terminal continuously transmits the search signal.

A processor of the present invention is characterized in that the processor is a processor provided in a user terminal supporting inter-terminal communication that is direct radio communication capable of being performed between user terminals in a state in which a radio connection with a network is established, and the processor performs a process of attempting to perform reception of a search signal from another user terminal at a constant cycle determined in response to a period in which the other user terminal continuously transmits the search signal.

A storage medium of the present invention is characterized in that the storage medium is a storage medium provided in a user terminal supporting inter-terminal communication that is direct radio communication capable of being performed between user terminals in a state in which a radio connection with a network is established, and the storage medium stores therein a program for causing the user terminal to perform a process of attempting to perform reception of a search signal from another user terminal at a constant cycle determined in response to a period in which the other user terminal continuously transmits the search signal.

Hereinafter, an embodiment of a cellular mobile communication system of the present invention will be described with reference to the accompanying drawings. In the present embodiment, a description will be provided for an embodiment in which D2D communication is introduced to a cellular mobile communication system (hereinafter, an "LTE system") configured to comply with the 3GPP standards.

### (1) Overview of LTE system

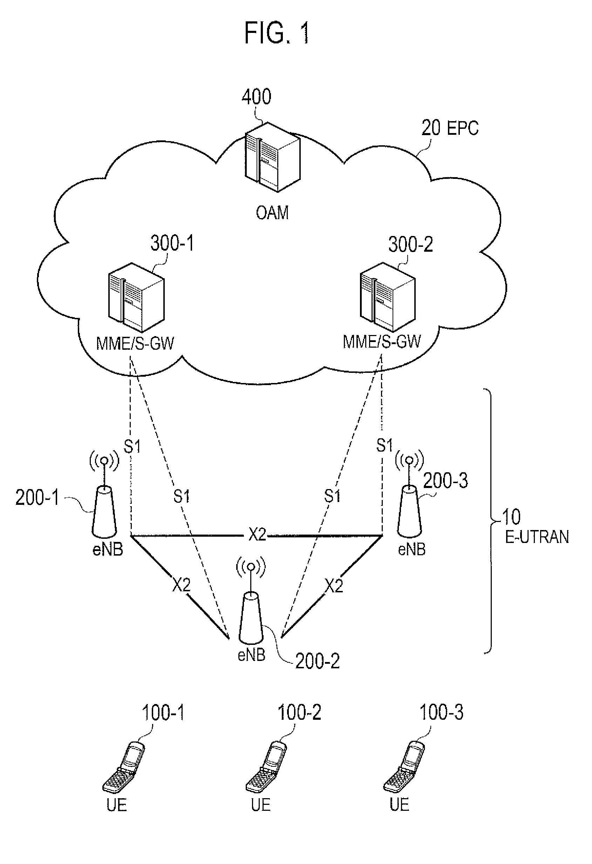

Fig. 1 is a configuration diagram of an LTE system according to the present embodiment.

As illustrated in Fig. 1, the LTE system includes a plurality of UEs (User Equipments) 100, E-UTRAN (Evolved-UMTS Terrestrial Radio Access Network) 10, and EPC (Evolved Packet Core) 20. In the present embodiment, the E-UTRAN 10 and the EPC 20 configure a network.

The UE 100 is a mobile radio communication device and performs radio communication with a cell (a serving cell) with which a radio connection is established. The UE 100 corresponds to a user terminal.

The E-UTRAN 10 includes a plurality of eNBs 200 (evolved Node-Bs). The eNB 200 corresponds to a base station. The eNB 200 manages a cell and performs radio communication with the UE 100 which is established a radio connection with the cell.

In addition, the "cell" is used as a term indicating a minimum unit of a radio communication area, and is also used as a function of performing radio communication with the UE 100.

The eNB 200, for example, has a radio resource management (RRM) function, a routing function of user data, and a measurement control function for mobility control and scheduling.

The EPC 20 includes MME (Mobility Management Entity)/S-GW (Serving-Gateway) 300 and OAM 400 (Operation and Maintenance).

The MME is a network node that performs various types of mobility control and the like for the UE 100 and corresponds to a control station. The S-GW is a network node that performs transfer control of user data and corresponds to a mobile switching center.

The eNBs 200 are connected mutually via an X2 interface. Furthermore, the eNBs 200 are connected to the MME/S-GW 300 via an S1 interface.

The OAM 400 is a server device managed by an operator and performs maintenance and monitoring of the E-UTRAN 10.

Next, the configurations of the UE 100 and the eNB 200 will be described.

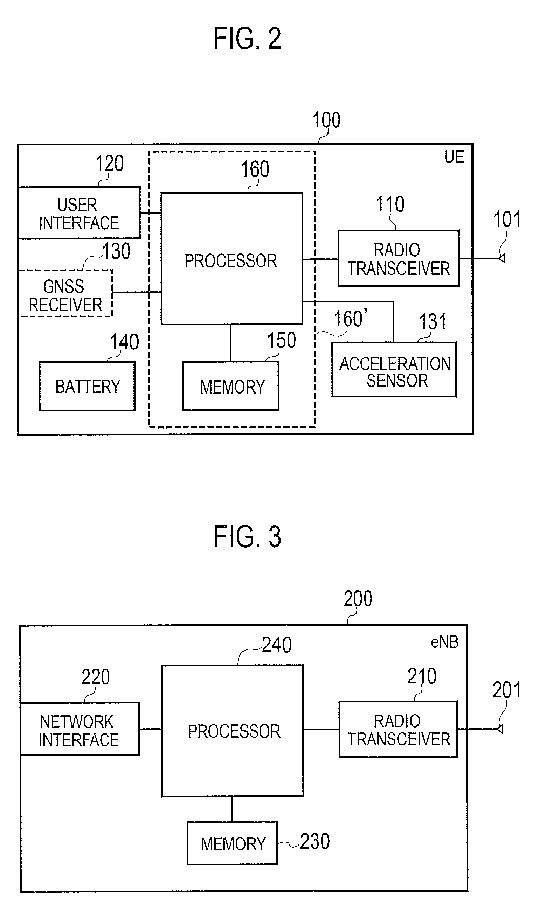

Fig. 2 is a block diagram of the UE 100. As illustrated in Fig. 2, the UE 100 includes an antenna 101, a radio transceiver 110, a user interface 120, a GNSS (Global Navigation Satellite System) receiver 130, an acceleration sensor 131, a battery 140, a memory 150, and a processor 160. The memory 150 corresponds to a storage medium.

The UE 100 may not have the GNSS receiver 130 or the acceleration sensor 131. Furthermore, the memory 150 may be integrally formed with the processor 160, and this set (that is, a chipset) may be called a processor 160'.

The antenna 101 and the radio transceiver 110 are used for transmission/reception of a radio signal. The antenna 101 includes a plurality of antenna elements. The radio transceiver 110 converts a baseband signal output from the processor 160 into a radio signal, and transmits the radio signal from the antenna 101. Furthermore, the radio transceiver 110 converts a radio signal received in the antenna 101 into a baseband signal, and outputs the baseband signal to the processor 160.

The user interface 120 is an interface with a user carrying the UE 100, and for example, includes a display, a microphone, a speaker, and various buttons and the like. The user interface 120 receives an operation from a user and outputs a signal indicating the content of the operation to the processor 160.

The GNSS receiver 130 receives a GNSS signal in order to obtain location information indicating a geographical location of the UE 100, and outputs the received signal to the processor 160. It is possible to evaluate the movement speed of the UE 100 on the basis of the location information of the UE 100.

The acceleration sensor 131 measures acceleration and outputs a result of the measurement to the processor 160. It is possible to evaluate the movement speed of the UE 100 on the basis of the acceleration.

The battery 140 accumulates power to be supplied to each block of the UE 100.

The memory 150 stores a program to be executed by the processor 160 and information to be used for a process by the processor 160.

The processor 160 includes a baseband processor configured to perform modulation/demodulation, coding/decoding and the like of the baseband signal, and CPU (Central Processing Unit) configured to perform various processes by executing the program stored in the memory 150. Moreover, the processor 160 may include a codec configured to perform coding/decoding of a voice/video signal.

The processor 160, for example, implements various communication protocols which will be described later, as well as implementing various applications. Details of the processes performed by the processor 160 will be described later.

Fig. 3 is a block diagram of the eNB 200. As illustrated in Fig. 3, the eNB 200 includes an antenna 201, a radio transceiver 210, a network interface 220, a memory 230, and a processor 240. It should be noted that the memory 230 and the processor 240 may be integrated into one set, and this one set (i.e. chipset) may be a processor.

The antenna 201 and the radio transceiver 210 are used for transmission/reception of a radio signal. The antenna 201 includes a plurality of antenna elements. The radio transceiver 210 converts a baseband signal output from the processor 240 into a radio signal, and transmits the radio signal from the antenna 201. Furthermore, the radio transceiver 210 converts a radio signal received in the antenna 201 into a baseband signal, and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240.

The processor 240 includes a baseband processor configured to perform modulation/demodulation, coding/decoding and the like of the baseband signal, and CPU configured to perform various processes by executing the program stored in the memory 230.

The processor 240, for example, implements various communication protocols which will be described later. Details of the processes performed by the processor 240 will be described later.

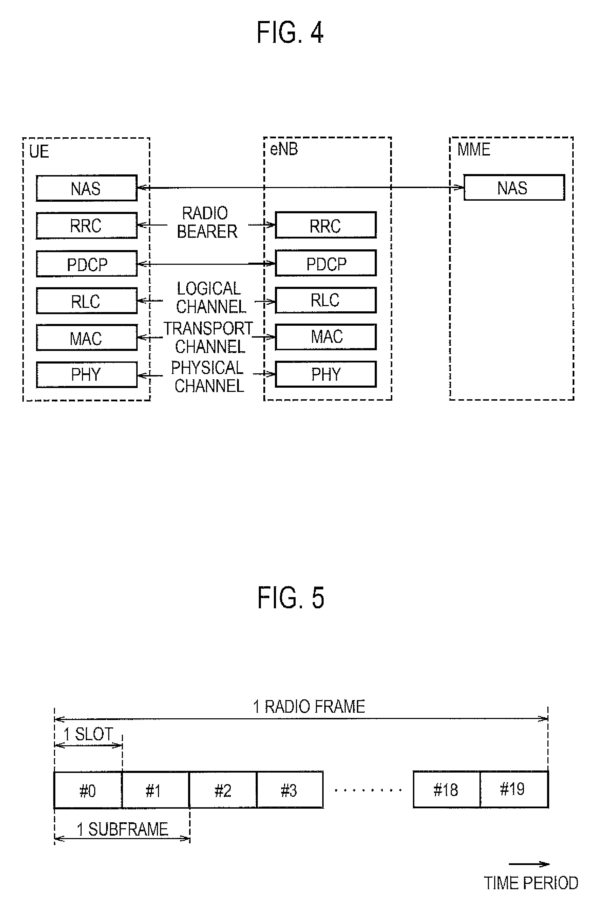

Fig. 4 is a protocol stack diagram of a radio interface in the LTE system.

As illustrated in Fig. 4, the radio interface protocol is classified into a layer 1 to a layer 3 of an OSI reference model, wherein the layer 1 is a physical (PHY) layer. The layer 2 includes a MAC (Medium Access Control) layer, an RLC (Radio Link Control) layer, and a PDCP (Packet Data Convergence Protocol) layer. The layer 3 includes an RRC (Radio Resource Control) layer.

The PHY layer performs coding/decoding, modulation/demodulation, antenna mapping/demapping, and resource mapping/demapping. The PHY layer provides a transmission service to an upper layer by using a physical channel. Between the PHY layer of the UE 100 and the PHY layer of the eNB 200, data is transmitted through the physical channel.

The MAC layer performs preferential control of data, and a retransmission process and the like by hybrid ARQ (HARQ). Between the MAC layer of the UE 100 and the MAC layer of the eNB 200, data is transmitted through a transport channel. The MAC layer of the eNB 200 includes a MAC scheduler for determining a transport format (a transport block size, a modulation and coding scheme, and the like) and a resource block of an uplink and a downlink.

The RLC layer transmits data to an RLC layer of a reception side by using the functions of the MAC layer and the PHY layer. Between the RLC layer of the UE 100 and the RLC layer of the eNB 200, data is transmitted through a logical channel.

The PDCP layer performs header compression/extension and encryption/decryption.

The RRC layer is defined only in a control plane. Between the RRC layer of the UE 100 and the RRC layer of the eNB 200, data is transmitted through a radio bearer. The RRC layer controls the logical channel, the transport channel, and the physical channel in response to establishment, re-establishment, and release of the radio bearer. When there is an RRC connection between RRC of the UE 100 and RRC of the eNB 200, the UE 100 is in an RRC connected state. Otherwise, the UE 100 is in an RRC idle state.

A NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiplexing Access) is employed in a downlink, and SC-FDMA (Single Carrier Frequency Division Multiple Access) is employed in an uplink, respectively.

As illustrated in Fig. 5, the radio frame includes 10 subframes arranged in a time-period direction, wherein each subframe includes two slots arranged in the time-period direction. Each subframe has a length of 1 ms and each slot has a length of 0.5 ms. Each subframe includes a plurality of resource blocks (RBs) in a frequency direction, and a plurality of symbols in the time-period direction. Each symbol is provided at a head thereof with a guard interval called a cyclic prefix (CP).

In the downlink, an interval of several symbols at the head of each subframe is a control region mainly used as a physical downlink control channel (PDCCH). Furthermore, the other interval of each subframe is a region mainly used as a physical downlink shared channel (PDSCH).

In the uplink, both end portions in the frequency direction of each subframe are control regions mainly used as a physical uplink control channel (PUCCH). Furthermore, the center portion in the frequency direction of each subframe is a region mainly used as a physical uplink shared channel (PUSCH).

### (2) Overview of D2D communication

Next, the LTE system will be described with comparing the normal communication (the cellular communication) with the D2D communication.

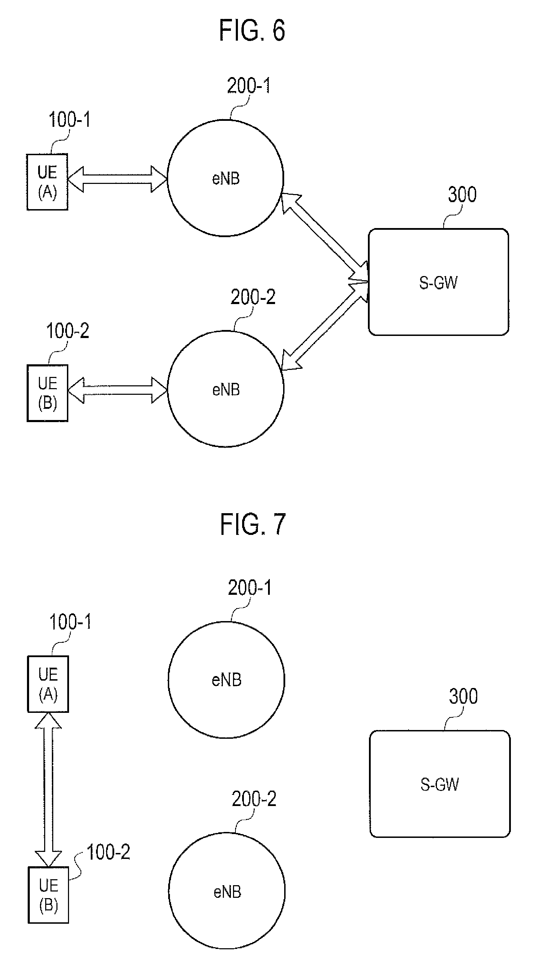

Fig. 6 illustrates a data path in the cellular communication. Furthermore, Fig. 6 illustrates the case in which the cellular communication is performed between UE (A) 100-1 which is established a radio connection with eNB 200-1 and UE (B) 100-2 which is established a radio connection with eNB 200-2. In addition, the data path indicates a data transfer path of user data (a user plane).

As illustrated in Fig. 6, the data path of the cellular communication passes through the network. Specifically, the data path via the eNB 200-1, the S-GW 300, and the eNB 200-2 is set.

Fig. 7 illustrates a data path in the D2D communication. Furthermore, Fig. 7 illustrates the case in which the D2D communication is performed between the UE (A) 100-1 which is established a radio connection with the eNB 200-1 and the UE (B) 100-2 which is established a radio connection with the eNB 200-2.

As illustrated in Fig. 7, the data path of the D2D communication does not pass through the network. That is, direct radio communication is performed between the UEs. In this way, when the UE (B) 100-2 exists in the vicinity of the UE (A) 100-1, the D2D communication is performed between the UE (A) 100-1 and the UE (B) 100-2, thereby obtaining an effect that a traffic load of the network and a battery consumption amount of the UE 100 are reduced and so on.

In addition, the D2D communication is assumed to be performed in the frequency band of the LTE system, and for example, in order to avoid interference to the cellular communication, the D2D communication is performed under the control of the network.

### (3) Summary of operation according to embodiment

Hereinafter, the operation according to the embodiment will be described.

### (3.1) Search operation

The UE (A) desiring to start the D2D communication should have a (Discover) function of discovering the UE (B) that is a communication partner existing in the vicinity of the UE (A). Furthermore, the UE (B) should have a (Discoverable) function of being discovered by the UE (A).

In the present embodiment, the UE (A) transmits a Discover signal (search signal) to around the UE (A) in order to discover the UE (B) that is a communication partner. In order to be discovered by the UE (A), the UE (B) waits for the Discover signal and transmits a response signal to the UE (A) in response to the reception of the Discover signal. Then, the network determines whether the D2D communication by the UE (A) and the UE (B) is possible.

### (3.1.1) Operation pattern 1

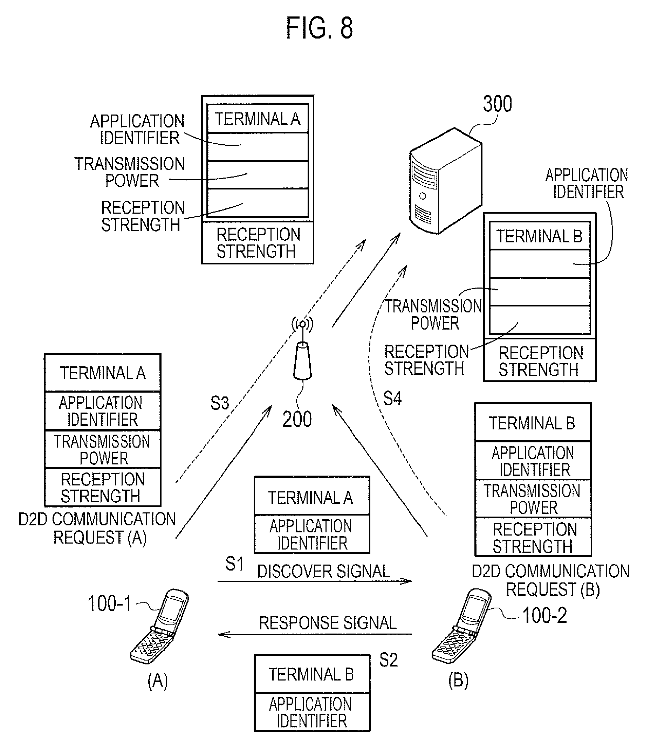

Fig. 8 is a sequence diagram of a search operation pattern 1 according to the present embodiment.

As illustrated in Fig. 8, in step S1, the UE (A) 100-1 transmits a Discover signal to around the UE (A) 100-1. The Discover signal includes an identifier of the UE (A) 100-1 and an identifier of an application to be used in the D2D communication. The Discover signal may further include an identifier of the UE (B) 100-2 that is a communication partner, or an identifier of a group (a D2D communication group) of the UE 100 which will perform the D2D communication. Furthermore, when transmitting the Discover signal, the UE (A) 100-1 stores transmission power of the Discover signal.

The UE (B) 100-2 waits for the Discover signal and receives the Discover signal from the UE (A) 100-1. The UE (B) 100-2 measures received power (reception strength) of the Discover signal and stores the measured received power.

In step S2, the UE (B) 100-2 transmits a response signal to the UE (A) in response to the reception of the Discover signal. The response signal includes an identifier of the UE (B) 100-2 and an identifier of an application to be used in the D2D communication. Furthermore, when transmitting the response signal, the UE (B) 100-2 stores transmission power of the response signal.

The UE (A) 100-1 waits for the response signal and receives the response signal from the UE (B) 100-2. The UE (A) 100-1 measures received power (reception strength) of the response signal and stores the measured received power.

In step S3, in response to the reception of the response signal, the UE (A) 100-1 transmits, to the eNB 200, a D2D communication request (A) indicating that the start of the D2D communication is desired. The D2D communication request (A) includes the identifier of the UE (A) 100-1 and the identifier of the application to be used in the D2D communication. The D2D communication request (A) further includes information on the transmission power of the Discover signal and information on the received power of the response signal.

When the D2D communication request (A) is received, the eNB 200 measures received power of the D2D communication request (A), adds information on the measured received power to the D2D communication request (A), and transfers the D2D communication request (A) to the MME/S-GW 300.

In step S4, in response to the transmission of the response signal, the UE (B) 100-2 transmits, to the eNB 200, a D2D communication request (B) indicating that the start of the D2D communication is desired. The D2D communication request (B) includes the identifier of the UE (B) 100-2 and the identifier of the application to be used in the D2D communication. The D2D communication request (B) further includes information on the transmission power of the response signal and information on the received power of the Discover signal.

When the D2D communication request (B) is received, the eNB 200 measures received power of the D2D communication request (B), adds information on the measured received power to the D2D communication request (B), and transfers the D2D communication request (B) to the MME/S-GW 300.

When the D2D communication request (A) and the D2D communication request (B) are received, the MME/S-GW 300 determines whether the D2D communication by the UE (A) 100-1 and the UE (B) 100-2 is possible on the basis of a distance between the UEs, a distance between the UE and the eNB, application characteristics and the like, which are obtained from the D2D communication request (A) and the D2D communication request (B). For example, the MME/S-GW 300 determines whether the D2D communication is possible by at least one of the following first determination reference to third determination reference.

Firstly, when the UE (B) 100-2 does not exist in the vicinity of the UE (A) 100-1, the MME/S-GW 300 determines that the D2D communication is not possible. This is because the D2D communication is basically performed between neighboring UEs 100, and interference and a battery consumption amount are increased when the D2D communication is performed between UEs 100 remote from each other.

For example, since it is possible to know propagation loss by the difference between the transmission power of the Discover signal included in the D2D communication request (A) and the received power of the Discover signal included in the D2D communication request (B), the MME/S-GW 300 is able to estimate a distance between the UE (A) 100-1 and the UE (B) 100-2 on the basis of the propagation loss. Similarly, since it is possible to know propagation loss by the difference between the transmission power of the response signal included in the D2D communication request (B) and the received power of the response signal included in the D2D communication request (A), the MME/S-GW 300 is able to estimate the distance between the UE (A) 100-1 and the UE (B) 100-2 on the basis of the propagation loss.

In addition, when the transmission power of the Discover signal and the transmission power of the response signal are each uniformly defined in an entire system in advance, information on the transmission power may not be included in the D2D communication request.

Secondly, when the eNB 200 exists in the vicinity of the UE (A) 100-1 or the eNB 200 exists in the vicinity of the UE (B) 100-2, the MME/S-GW 300 determines that the D2D communication is not possible. This is because interference to the eNB 200 is increased when the D2D communication is performed in the vicinity of the eNB 200.

For example, since it is possible to know rough propagation loss from received power when the eNB 200 received the D2D communication request (A), the MME/S-GW 300 is able to estimate the distance between the UE (A) 100-1 and the eNB 200 on the basis of the propagation loss. Similarly, since it is possible to know rough propagation loss from received power when the eNB 200 received the D2D communication request (B), the MME/S-GW 300 is able to estimate the distance between the UE (B) 100-2 and the eNB 200 on the basis of the propagation loss.

Thirdly, in the case of an application that generates temporary traffic or in a small amount (a low load), the MME/S-GW 300 determines that the D2D communication is not possible. In other words, only in the case of an application that generates continuous traffic with a large capacity (a high load), the MME/S-GW 300 determines that the D2D communication is possible. This is because a merit of the D2D communication may not be sufficiently achieved when treating traffic temporarily or in a low load.

For example, since a streaming or video communication application generates continuous traffic with a high load, the MME/S-GW 300 determines that the D2D communication is possible. Details thereof will be described later, but the D2D communication may also be applied to the application that generates the traffic temporarily or in a small amount (a low load).

When it is determined that the D2D communication by the UE (A) 100-1 and the UE (B) 100-2 is possible, the MME/S-GW 300 notifies the eNB 200 of necessary information and the fact that the D2D communication is possible, so that the D2D communication is started under the control of the eNB 200.

According to the operation pattern 1, the D2D communication is possible only when the UE (A) 100-1 and the UE (B) 100-2 are in a state suitable for the D2D communication.

### (3.1.2) Operation pattern 2

The aforementioned operation pattern 1 assumes the case in which the UE (B) always waits for the Discover signal. However, for example, it is possible to assume the case of stopping waiting for the Discover signal in order to reduce a battery consumption amount. In this regard, in the operation pattern 2, it is assumed that UE (A) is able to discover UE (B) in such a sleep state of the D2D communication.

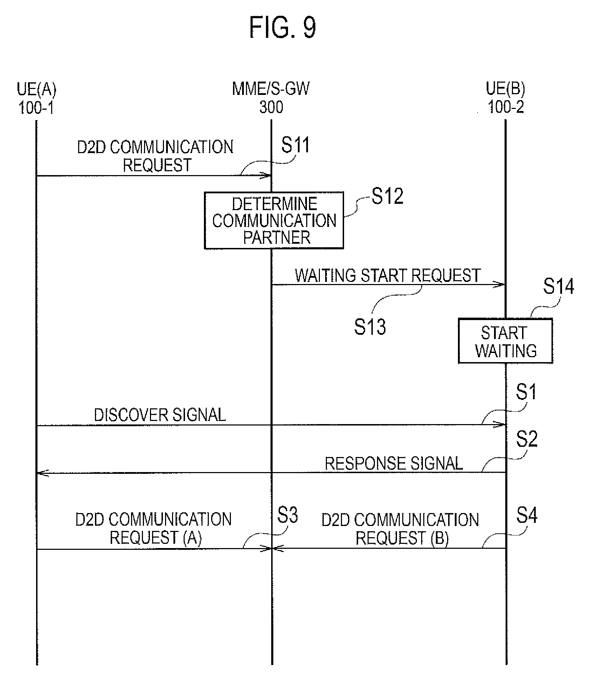

Fig. 9 is a sequence diagram of the search operation pattern 2 according to the present embodiment.

As illustrated in Fig. 9, in step S11, the UE (A) 100-1 transmits, to the eNB 200, a D2D communication request indicating that the start of the D2D communication is desired. The eNB 200 transfers the D2D communication request from the UE (A) 100-1 to the MME/S-GW 300. The D2D communication request includes the identifier of the UE (A) 100-1 and the identifier of the application to be used in the D2D communication. The Discover signal may further include an identifier of the UE (B) 100-2 that is a communication partner, or an identifier of a group (a D2D communication group) of the UE 100 which will perform the D2D communication.

In step S12, the MME/S-GW 300 designates UE (B) 100-2, which satisfies the D2D communication request from the UE (A) 100-1, among UEs 100 existing in a camping area (or a camping cell) of the UE (A) 100-1. Furthermore, the MME/S-GW 300 confirms the state of the UE (B) 100-2 so as to determine whether the waiting for the Discover signal is in progress or being cancelled. Hereinafter, the following description will be given on the assumption that the UE (B) 100-2 stops waiting for the Discover signal.

In step S13, the MME/S-GW 300 transmits, to the eNB 200, a waiting start request directed to the UE (B) 100-2. The eNB 200 transfers the waiting start request from the MME/S-GW 300 to the UE (B) 100-2.

In step S14, when the waiting start request is received, the UE (B) 100-2 starts to wait for the Discover signal. Specifically, the UE (B) 100-2 attempts the reception of the Discover signal at a predetermined cycle.

After starting to wait for the Discover signal, when the Discover signal from the UE (A) 100-1 is received (step S1), the UE (B) 100-2 transmits a response signal for the Discover signal to the UE (A) 100-1 (step S2). Subsequent operations are similar to those of the operation pattern 1.

According to the operation pattern 2, the UE (B) 100-2 even in the sleep state of the D2D communication can be discovered by the UE (A) 100-1.

### (3.2) Transmission/reception cycles of Discover signal

Next, the transmission/reception cycles of the Discover signal will be described.

### (3.2.1) Transmission cycle of Discover signal

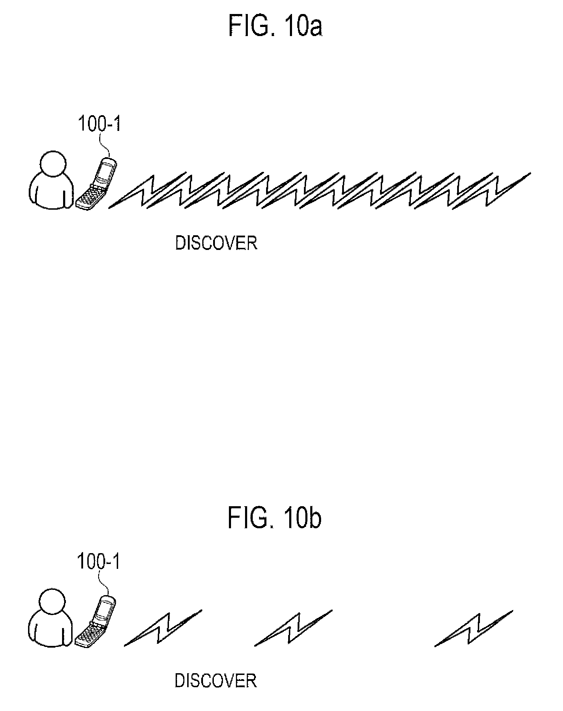

Fig. 10 to Fig. 12 are diagrams for explaining the transmission cycle of the Discover signal.

As illustrated in Fig. 10(a), when starting searching for a communication partner of the D2D communication, the UE (A) 100-1 continuously transmits the Discover signal in a constant period (T1). When the UE (A) 100-1 does not received a response signal for the Discover signal in the constant period (T1), the UE (A) 100-1 changes the transmission cycle of the Discover signal.

As illustrated in Fig. 10(b), when the response signal for the Discover signal is not received in the constant period (T1) and the UE (A) 100-1 stops, since it is considered that the UE (B) (a communication partner) rarely appears in the vicinity of the UE (A) 100-1, the UE (A) 100-1 changes the transmission cycle of the Discover signal to be long after the constant period (T1) passes. In this way, it is possible to reduce a battery consumption amount due to the transmission of the Discover signal.

Furthermore, the UE (A) 100-1 controls the transmission of the Discover signal in response to the movement state of the UE (A) 100-1.

Firstly, the UE (A) 100-1 changes the transmission cycle of the Discover signal in response to the movement speed of the UE (A) 100-1. The movement speed of the UE (A) 100-1, for example, may be recognized using the GNSS receiver 130 or the acceleration sensor 131. Details thereof will be described later. However, the movement speed may be evaluated in consideration of whether the UE (A) 100-1 is within a moving body such as a vehicle.

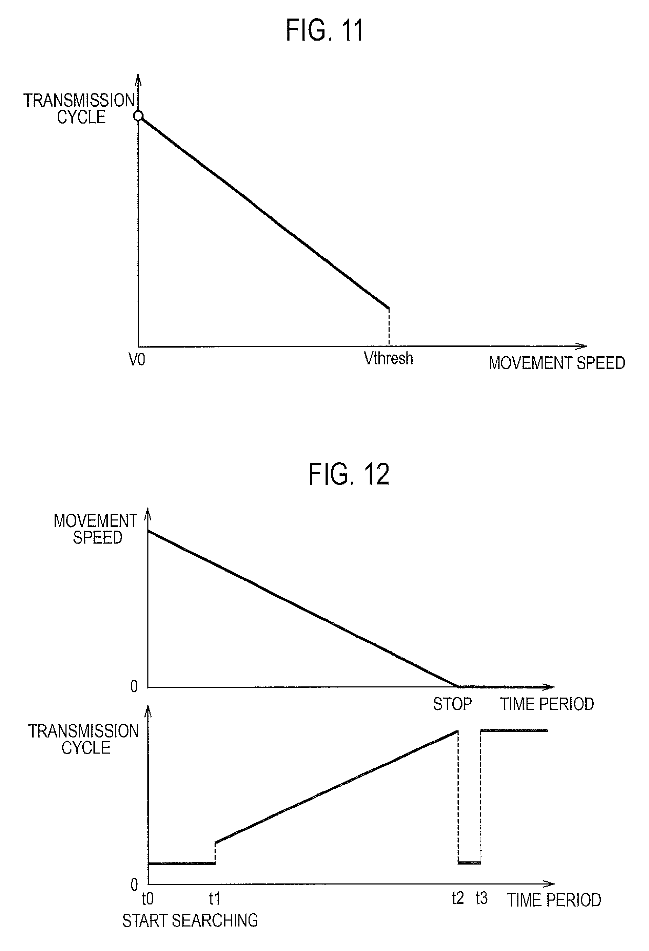

Table 1 illustrates a relation between the movement speed and the transmission of the Discover signal. Fig. 11 illustrates the relation between the movement speed and the transmission cycle of the Discover signal.

**[Table 1]**

| Movement speed (v) | Transmission method |
|---|---|
| v ≤ v0 | transmit Discover signal at non-constant (random) (or constant) interval |
| v₀ < v < Vₜₕᵣₑₛₕ | allow transmission cycle of Discover signal to be short in response to an increase in movement speed |
| v ≥ Vₜₕᵣₑₛₕ | stop transmission of Discover signal |

As illustrated in Table 1 and Fig. 11, the UE (A) 100-1 allows the transmission cycle of the Discover signal to be short in response to an increase in the movement speed. The reason for allowing the transmission cycle of the Discover signal to be short as described above is because it is considered that the UE (B) (a communication partner) may be discovered with high probability as the movement speed is high.

However, in the situation in which the UE (A) 100-1 moves at a high speed, the D2D communication is difficult to be performed. Thus, when the movement speed of the UE (A) 100-1 has exceeded a threshold value vₜₕᵣₑₛₕ, the UE (A) 100-1 stops the transmission of the Discover signal. In this way, it is possible to reduce a battery consumption amount due to the transmission of the Discover signal. In addition, the threshold value vₜₕᵣₑₛₕ may be a value of speed at which the UE (A) 100-1 instantaneously passes through a communicable radius of the D2D communication.

Secondly, the UE (A) 100-1 changes the transmission cycle of the Discover signal in response to the UE (A) 100-1 switching between "moving" and "stopping". Whether the UE (A) 100-1 is in the process of moving or stopping, for example, may be recognized by using the GNSS receiver 130 or the acceleration sensor 131.

When the UE (A) 100-1 was transitioned in state from "moving" to "stopping", it is preferable that the UE (B) (a communication partner) is discovered at a stopped place. Thus, when the UE (A) 100-1 was transitioned from "moving" to "stopping", the UE (A) 100-1 continuously transmits the Discover signal in a constant period (T2).

Next, the transmission cycle of the Discover signal will be described with reference to a detailed example. Fig. 12 illustrates the transmission cycle of the Discover signal when the UE (A) 100-1 stops due to the reduction of the movement speed thereof after starting searching (Discover) in the process of "moving".

As illustrated in Fig. 12, from a search start timing t0 to a timing t1 after the constant period (T1) passes, the UE (A) 100-1 continuously transmits the Discover signal regardless of the movement speed.

After the timing t1, the UE (A) 100-1 allows the transmission cycle of the Discover signal to be long in response to the reduction of the movement speed of the UE (A) 100-1.

At a timing t2, the UE (A) 100-1 is transitioned in state from "moving" to "stopping". From the timing t0 at which the UE (A) 100-1 was transitioned to the state of being stopping to a timing t3 after the constant period (T2) passes, the UE (A) 100-1 continuously transmits the Discover signal regardless of the movement speed.

After the timing t3, the UE (A) 100-1 makes the transmission cycle of the Discover signal long on the basis of the UE (A) 100-1 being in the state of being stopping.

### (3.2.2) Reception cycle of Discover signal

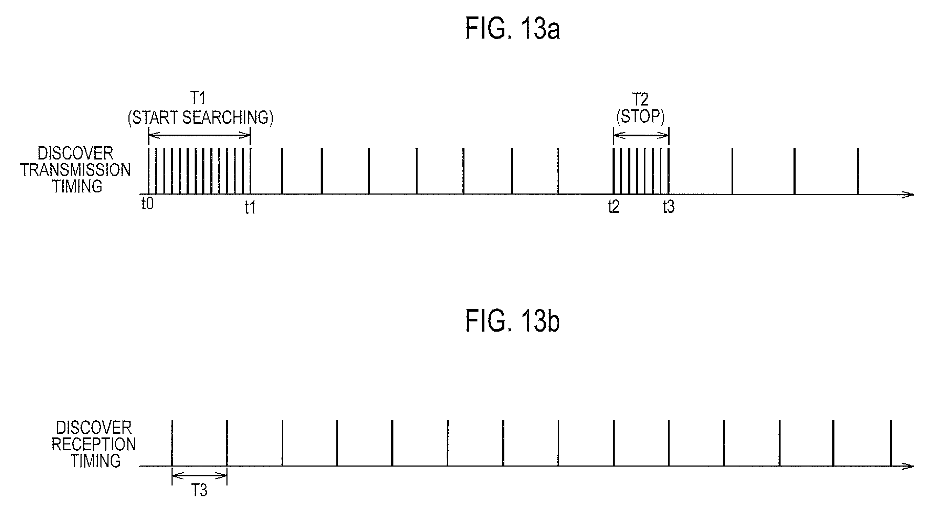

Fig. 13 is a diagram for explaining the reception cycle of the Discover signal.

As illustrated in Fig. 13, the UE (B) 100-2 attempts to perform the reception of the Discover signal from the UE (A) 100-1 at a constant cycle (T3). The constant cycle (T3) is determined in response to the period (T1 or T2) in which the UE (A) 100-1 continuously transmits the Discover signal.

Specifically, a time length of the cycle (T3) is set to be equal to or less than a shorter one of the constant period (T1) at the time of search start and the constant period (T2) at the time of being stopping. In the example of Fig. 13, since the constant period (T2) at the time of being stopping has been set to be shorter than the constant period (T1) at the time of starting searching, the cycle (T3) is set to be equal to the constant period (T2) at the time of being stopping.

In this way, the cycle (T3) is set, so that it is possible to reliably receive the Discover signal continuously transmitted in the constant period (T1) at the time of starting searching and the constant period (T2) at the time of being stopping while suppressing a battery consumption amount for receiving the Discover signal.

However, as described above, in the situation in which the UE (B) 100-2 moves at a high speed, the D2D communication is difficult to be performed. Thus, when the movement speed of the UE (B) 100-2 has exceeded the threshold value vₜₕᵣₑₛₕ, the UE (B) 100-2 may stop the reception of the Discover signal.

### (3.2.3) Method of calculating movement speed

It is preferable that the movement speed for controlling the transmission cycle (or reception cycle) of the Discover signal is calculated in consideration of whether UE 100 is within a moving body. For example, even though the UE 100 within a moving body moves at a high speed, it is preferable that D2D communication between the UE 100 and another UE 100 within the moving body is possible.

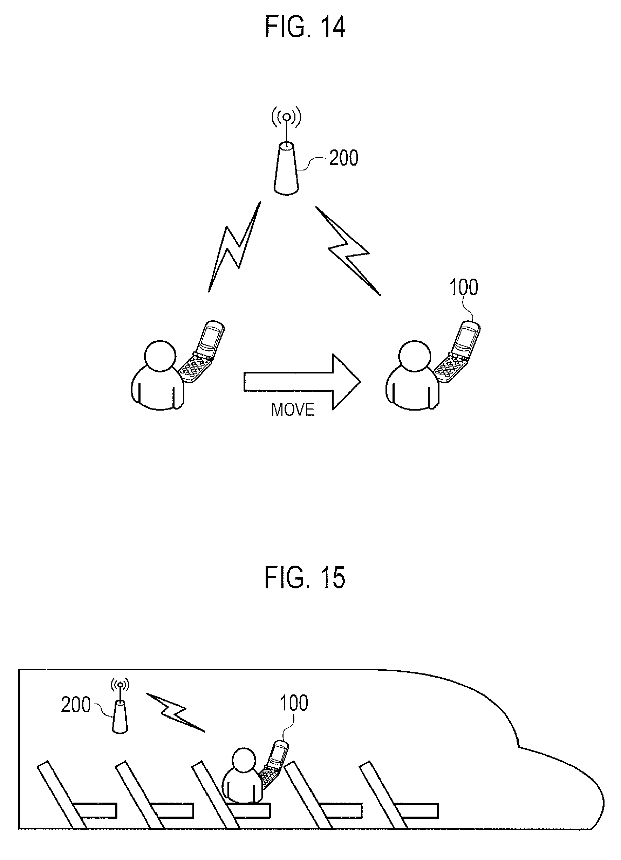

Fig. 14 and Fig. 15 are diagrams for explaining a method of determining whether the UE 100 is within a moving body. In the present embodiment, the UE 100 determines whether the UE 100 is within a moving body on the basis of variation in a radio propagation environment. As illustrated in Fig. 14, when the UE 100 is not within a moving body, variation in received power (reception strength) of a radio signal received in the UE 100 from the eNB 200 is large. As illustrated in Fig. 15, when the UE 100 is within a moving body and the eNB 200 is also within the moving body, variation in received power (reception strength) of a radio signal received in the UE 100 from the eNB 200 is small. Thus, on the basis of the size of the variation, it is possible to determine whether the UE 100 is within a moving body.

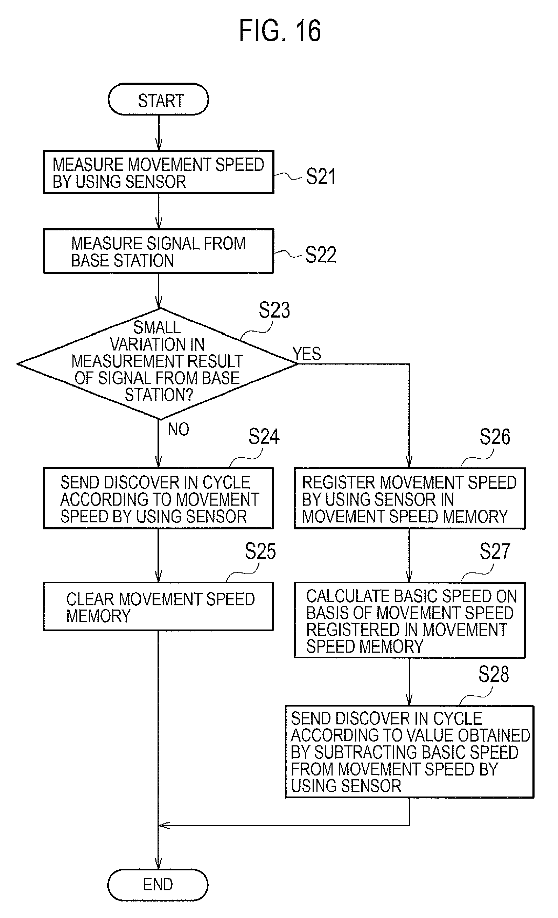

Fig. 16 is a flow diagram illustrating a calculation operation of the movement speed. Hereinafter, the UE (A) 100-1, which is a transmission side of the Discover signal, will be explained as an example.

As illustrated in Fig. 16, in step S21, the UE (A) 100-1 measures the movement speed thereof using the GNSS receiver 130 or the acceleration sensor 131.

In step S22, the UE (A) 100-1 measures received power of a radio signal (a reference signal) received from the eNB 200.

In step S23, the UE (A) 100-1 confirms whether variation in the received power measured in step S22 is large or small.

When the variation is large (step S23; No), the UE (A) 100-1 regards that the UE (A) 100-1 is not within a moving body and controls the transmission cycle of the Discover signal in response to the movement speed measured in step S21, in step S24. Then, the UE (A) 100-1 clears a movement speed memory (step S25), ends the process once, and restarts the procedure from step S21.

Meanwhile, when the variation is small (step S23; Yes), the UE (A) 100-1 regards that the UE (A) 100-1 is within the moving body and registers the movement speed measured in step S21 in the movement speed memory, in step S26.

In step S27, the UE (A) 100-1 calculates a basic speed on the basis of the movement speed registered in the movement speed memory. For example, an average of the latest measured values registered in the movement speed memory may be set as the basic speed. Furthermore, the calculated basic speed corresponds to the movement speed of the moving body.

In step S28, the UE (A) 100-1 sets a value, which is obtained by subtracting the basic speed calculated in step S27 from the movement speed measured in step S21, as the movement speed of the UE (A) 100-1, and controls the transmission cycle of the Discover signal in response to the movement speed. Then, the UE (A) 100-1 ends the process once and restarts the procedure from step S21.

### (4) Other embodiments

It should not be understood that those descriptions and drawings constituting a part of the present disclosure limit the present invention. From this disclosure, a variety of alternate embodiments, examples, and applicable techniques will become apparent to one skilled in the art.

In the aforementioned embodiment, an entity determining whether the D2D communication is possible is the MME/S-GW 300. However, the eNB 200 may determine whether the D2D communication is possible.

In the aforementioned embodiment, the UE (A) 100-1 determines whether the UE (A) 100-1 is within a moving body on the basis of the state of a reception signal from the eNB 200. However, another determination reference may be applied. For example, the UE (A) 100-1 may determine that the UE (A) 100-1 is within a moving body when the movement speed of the UE (A) 100-1 is equal to or more than a predetermined speed (for example, 50 km/hour).

A transmission side of a response signal (a Discoverable signal) for the Discover signal may transmit the Discoverable signal at a constant cycle, similarly to the reception cycle of the Discover signal. A reception side of the Discoverable signal may implement the reception of the Discoverable signal at a reception cycle corresponding to a movement state and a movement speed, similarly to the transmission cycle of the Discover signal.

In addition, the entire content of US Provisional Application No. 61/656186 (filed on June 6, 2012) is incorporated in the present specification by reference.

### [Industrial Applicability]

As described above, the present invention is able to appropriate ly control the D2D communication, and thus is available for a radio co mmunication field such as cellular mobile communication.

## Claims

1. A communication control method used in a cellular mobile communication system supporting inter-terminal communication that is direct radio communication capable of being performed between user terminals in a state in which a radio connection with a network is established, comprising:
a step of continuously transmitting, by the user terminal, a search signal for discovering a communication partner of the inter-terminal communication in a constant period when starting searching for the communication partner.

2. The communication control method according to claim 1, further comprising: a step of changing, by the user terminal, a transmission cycle of the search signal when a response signal for the search signal is not received in the constant period.

3. A user terminal supporting inter-terminal communication that is direct radio communication capable of being performed between user terminals in a state in which a radio connection with a network is established, comprising:
a processor that performs a process of continuously transmitting a search signal for discovering a communication partner of the inter-terminal communication in a constant period when starting searching for the communication partner.

4. A processor provided in a user terminal supporting inter-terminal communication that is direct radio communication capable of being performed between user terminals in a state in which a radio connection with a network is established, wherein
the processor performs a process of continuously transmitting a search signal for discovering a communication partner of the inter-terminal communication in a constant period when starting searching for the communication partner.

5. A storage medium provided in a user terminal supporting inter-terminal communication that is direct radio communication capable of being performed between user terminals in a state in which a radio connection with a network is established, wherein,
the storage medium stores therein a program for causing the user terminal to perform a process of continuously transmitting a search signal for discovering a communication partner of the inter-terminal communication in a constant period when starting searching for the communication partner.

6. A communication control method used in a cellular mobile communication system supporting inter-terminal communication that is direct radio communication capable of being performed between user terminals in a state in which a radio connection with a network is established, comprising:
a step of controlling, by the user terminal, transmission of a search signal for discovering a communication partner of the inter-terminal communication in response to a movement state of the user terminal.

7. The communication control method according to claim 6, wherein the movement state includes a movement speed, and
the step of controlling comprises:
a step of changing a transmission cycle of the search signal in response to the movement speed.

8. The communication control method according to claim 7 comprising:
a step of stopping the transmission of the search signal, when the movement speed has exceeded a threshold value.

9. The communication control method according to claim 7, further comprising: a step of calculating, by the user terminal, a movement speed of the user terminal in consideration of a movement speed of a moving body when the user terminal is within the moving body.

10. The communication control method according to claim 6, wherein
the movement state includes being moving and being stopping, and
the step of controlling comprises:
a step of continuously transmitting the search signal in a constant period, when the user terminal is transitioned from the being moving to the being stopping.

11. A user terminal supporting inter-terminal communication that is direct radio communication capable of being performed between user terminals in a state in which a radio connection with a network is established, comprising:
a processor that performs a process of controlling transmission of a search signal for discovering a communication partner of the inter-terminal communication in response to a movement state of the user terminal.

12. A processor provided in a user terminal supporting inter-terminal communication that is direct radio communication capable of being performed between user terminals in a state in which a radio connection with a network is established, wherein
the processor performs a process of controlling transmission of a search signal for discovering a communication partner of the inter-terminal communication in response to a movement state of the user terminal.

13. A storage medium provided in a user terminal supporting inter-terminal communication that is direct radio communication capable of being performed between user terminals in a state in which a radio connection with a network is established, wherein,
the storage medium stores therein a program for causing the user terminal to perform a process of controlling transmission of a search signal for discovering a communication partner of the inter-terminal communication in response to a movement state of the user terminal.

14. A communication control method used in a cellular mobile communication system supporting inter-terminal communication that is direct radio communication capable of being performed between user terminals in a state in which a radio connection with a network is established, comprising:
a step of attempting to perform, by the user terminal, reception of a search signal from another user terminal at a constant cycle, wherein
the constant cycle is determined in response to a period in which the other user terminal continuously transmits the search signal.

15. A user terminal supporting inter-terminal communication that is direct radio communication capable of being performed between user terminals in a state in which a radio connection with a network is established, comprising:
a processor that performs a process of attempting to perform reception of a search signal from another user terminal at a constant cycle determined in response to a period in which the other user terminal continuously transmits the search signal.

16. A processor provided in a user terminal supporting inter-terminal communication that is direct radio communication capable of being performed between user terminals in a state in which a radio connection with a network is established, wherein
the processor performs a process of attempting to perform reception of a search signal from another user terminal at a constant cycle determined in response to a period in which the other user terminal continuously transmits the search signal.

17. A storage medium provided in a user terminal supporting inter-terminal communication that is direct radio communication capable of being performed between user terminals in a state in which a radio connection with a network is established, wherein,
the storage medium stores therein a program for causing the user terminal to perform a process of attempting to perform reception of a search signal from another user terminal at a constant cycle determined in response to a period in which the other user terminal continuously transmits the search signal.
